(19) Europäisches Patentamt
European Patent Office
Office européen des brevets

(11) **EP 4 498 253 A1**

(12) **EUROPEAN PATENT APPLICATION**

(43) Date of publication:
**29.01.2025 Bulletin 2025/05**

(21) Application number: **23188528.6**

(22) Date of filing: **28.07.2023**

(51) International Patent Classification (IPC):
**G06F 11/36** (2025.01)   **G06N 20/10** (2019.01)
**G06N 3/006** (2023.01)   **G06N 20/00** (2019.01)

(52) Cooperative Patent Classification (CPC):
**G06F 11/3672; G06N 3/006; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Industry Software NV**
**3001 Leuven (BE)**

(72) Inventors:
• **ALIREZAEI, Mohsen**
**5629NX Eindhoven (NL)**
• **PATHRUDKAR, Sagar**
**411041 Pune (IN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **SYSTEM AND METHOD FOR MANAGING TESTING OF AUTONOMOUS VEHICLES**

(57)    A system and method for managing testing of an autonomous vehicle is disclosed herein. The method comprises obtaining a training dataset from a source, by a processing unit (120). Further, one or more adversarial agents (204) and a software stack (206) associated with an autonomous vehicle (212) are synchronously trained based on the training dataset. Each of the adversarial agents (204) are configured to mimic one or more entities (210) that impact behavior of the autonomous vehicle in a real-world environment. Further, a virtual testing environment comprising the trained one or more adversarial agents (204), is configured based on a user request. The virtual testing environment is then deployed onto a test execution platform for enabling testing of a dynamic behavior of at least another autonomous vehicle in response to one or more safety-critical scenarios simulated by the virtual testing environment.

**FIG 3**

300

305 → 310 → 315 → 320 → 325

EP 4 498 253 A1

**Description**

The present invention relates to testing of autonomous vehicles. More particularly, the present invention relates to system and method for managing testing of autonomous vehicles.

A crucial factor in the development and deployment of autonomous vehicles (AVs) is their safety and reliability. Autonomous vehicles typically operate in complex environments characterized by high-dimensionality, non-linearity, stochastici-ty, and non-stationarity. Moreover, the operational environment of an autonomous vehicle continuously evolves by responding to actions performed by the autonomous vehicle, and is therefore, responsive or closed loop in nature. The autonomous vehicle is controlled by a software stack trained to maneuver in such complex operational environments. The software stack must be tested rigorously using increasingly complex scenarios in order to improve safety and reliability of the autonomous vehicle. Such testing of the software stack may only be performed by equally complex testing algorithms.

In existing prior art, an agents-based system is to test an autonomous vehicle in a software-in-the-loop test setting. The agents are a collection of computational agents that simulate behavior of dynamic or static entities in a real-world environment, such as vehicles, pedestrians, weather, fog, illumination, road surface etc. Each of the agent may be autonomous or semi-autonomous in nature. Further, the agents may be based on mathematical modelling of the dynamic or static objects present in the real-world environment based on, for example, machine learning models or other algorithms. The agents collaboratively create difficult-to-maneuver scenarios and situations for the software stack in a simulated environment. Such an agents-based system may also be used to identify failure points of an autonomous vehicle. Naturally, such an agents-based system is difficult to design by hand due to various complexities involved. To test such the agents-based system, we must challenge it with other algorithm(s). Moreover, the number of possible combinations and permutations of scenario variables that the autonomous vehicle would encounter may be enormous in the real-world. This is considered a state-space explosion problem. Further, it is not likely that these agents may expose every possible failure mode of the autonomous vehicle. Hence, there is a need to create continuously learning, reactive agents capable of identifying behavior of a system-under-test, to continuously create adversarial safety critical scenarios. This helps in identifying the unknown and unsafe parts of a test space used for testing of autonomous vehicles.

In light of the above, there exists a need for an improved system and method for managing testing of autonomous vehicles.

The object of the present invention is achieved by a system, apparatus, and method for managing testing of autonomous vehicles as disclosed herein.

The method includes obtaining a training dataset from a source, by a processing unit. The method further includes synchronously training one or more adversarial agents and a software stack associated with an autonomous vehicle, based on the training dataset, wherein each of the adversarial agents model one or more entities that impact behavior of the autonomous vehicle in a real-world environment. In an embodiment, the one or more entities represented by the adversarial agents comprise at least one of weather, illumination, road geometry, road surface, traffic signals, traffic signboards, pedestrians, obstacles and other vehicles.

In an embodiment, synchronously training the one or more adversarial agents and the software stack includes, configuring a closed loop adversarial learning setting in a simulation environment, based on the one or more adversarial agents and the software stack. Further, a plurality of safety-critical scenarios is simulated for the autonomous vehicle based on the closed loop adversarial learning setting, within the simulation environment, to generate one or more simulation results. The one or more simulation results are indicative of a response of the autonomous vehicle to the plurality of safety-critical scenarios. Further, one or more safety metrics associated with the autonomous vehicle are computed by analyzing the one or more simulation results.

In a further embodiment, the method may include computing a net safety criticality score based on the one or more safety metrics, using a predefined function, wherein the net safety criticality score is one of a first category and a second category. Further, a reinforcement feedback is generated based on the net safety criticality score. The reinforcement feedback is provided to both the software stack and the one or more adversarial agents, synchronously, for updating respective policies of each of the software stack and the one or more adversarial agents.

In an embodiment, generating the reinforcement feedback based on the net safety criticality score includes generating a positive learning feedback for the one or more adversarial agents and a negative learning feedback for the software stack, if the net safety criticality score is of the first category, and generating a negative learning feedback for the one or more adversarial agents and a positive learning feedback for the software stack, if the net safety criticality score is of the second category.

The method further includes configuring a virtual testing environment comprising the trained one or more adversarial agents, based on a user request. The method further includes deploying the virtual testing environment in a test execution platform for enabling testing of a dynamic behavior of at least another autonomous vehicle in response to one or more safety-critical scenarios simulated by the virtual testing environment. In an embodiment, the test execution platform is associated with one of vehicle-in-loop testing, human-in-loop testing, software-in-loop testing, and model-in-loop testing. In an embodiment, an output of the system-under-test in response to one or more safety-critical scenarios simulated by the virtual testing environment is indicative of the dynamic behavior of the autonomous vehicle.

Disclosed herein is also a computer system arranged and configured to execute the steps of the computer-implemented method according to any one of the preceding method steps.

Disclosed herein is also a computer-readable medium, on which program code sections of a computer program are saved, the program code sections being loadable into and/or executable by a processor which performs the method as described above when the program code sections are executed.

Disclosed herein is also a computer-program product having machine-readable instructions stored therein, which when executed by a test execution platform, cause the test execution platform to be configured based on a virtual testing environment comprising one or more adversarial agents trained according to any of the preceding steps.

Additionally, a computer-readable medium comprising a computer program product which, when executed by a test execution platform, cause the test execution platform to be configured based on a virtual testing environment comprising one or more adversarial agents trained according to any of the preceding steps.

The realization of the invention by a computer program product and/or a non-transitory computer-readable storage medium has the advantage that computer systems can be easily adopted by installing computer program in order to work as proposed by the present invention.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:

FIG 1A      illustrates a block-diagram of a testing environment for managing testing of autonomous vehicles, in accordance with an embodiment of the present invention;

FIG 1B      illustrates a block-diagram of an apparatus for managing testing of autonomous vehicles, in accordance with an embodiment of the present invention;

FIG 2      using a common training dataset to synchronously train one or more adversarial agents and a software stack associated with an autonomous vehicle, in accordance with an embodiment of the present invention;

FIG 3      depicts a flowchart of an exemplary method for managing testing of autonomous vehicles, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

Examples provided herein are intended for illustrative purposes only and should not be construed as limiting the scope of the invention. The examples are non-limiting and are provided solely to aid in understanding the embodiments described. It should be understood that the invention is not limited to the specific embodiments or examples provided herein.

In the field of autonomous vehicles, terms such as 'scene' and 'scenario' are commonly used to refer to the dynamic environment in which the autonomous vehicle operates. It must be understood that a 'scene' typically encompasses the surroundings, including the road, surrounding objects, and traffic, while 'scenario' refers to specific driving situations and conditions. Accordingly, the term 'scene' as used in the present disclosure, refers to a snapshot of a virtual environment that mimics a real environment, of the autonomous vehicle, comprising static entities (scenery) and dynamic entities, and the relationships among those entities. The term 'scenario' as used herein refers to temporal development between several scenes within the virtual environment, indicative of specific driving situations and conditions, leading to a specific outcome. As the terms 'scene' and 'scenario' are well-known in the field of autonomous systems and given their widely recognized usage and under-standing within the field, further elaboration on the definitions and concepts of 'scene' and 'scenario' is not provided in this disclosure.

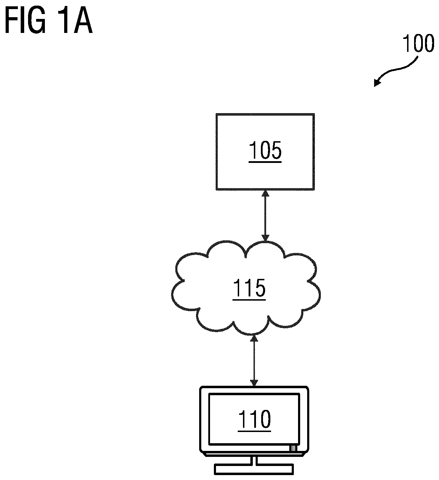

FIG 1A illustrates a block-diagram of a testing environment 100 for testing of an autonomous vehicle, in accordance with an embodiment of the present invention. The testing environment 100 comprises an apparatus 105 communicatively coupled to at least one client device 110 via a network 115. In an embodiment, the apparatus 105 is a cloud computing platform. The client device 110 may be for example, a human-machine interface that enables testing personnel (user) to interact with the apparatus 105.

The term autonomous vehicles as used herein may refer to autonomous vehicles of different levels of driving automation such as partial automation (level 2), conditional automation (level 3), high automation (level 4) and full automation (level 5). Some autonomous vehicles possess a non-deterministic behavior in the real-world. The behavior of such autonomous vehicles may be governed by how a software stack of an autonomous vehicle reacts to stimuli from the real-world as perceived by sensors associated with the autonomous vehicle. For example, the stimuli may include outputs from cameras, lidars and radars attached to a body of the autonomous vehicle. Such autonomous vehicles may also operate based on inputs received from a human operator or another system through an interface. For example, in case of an autonomous vehicle, a driver may choose to 'disengage' from autonomous mode to revert to a manual mode.

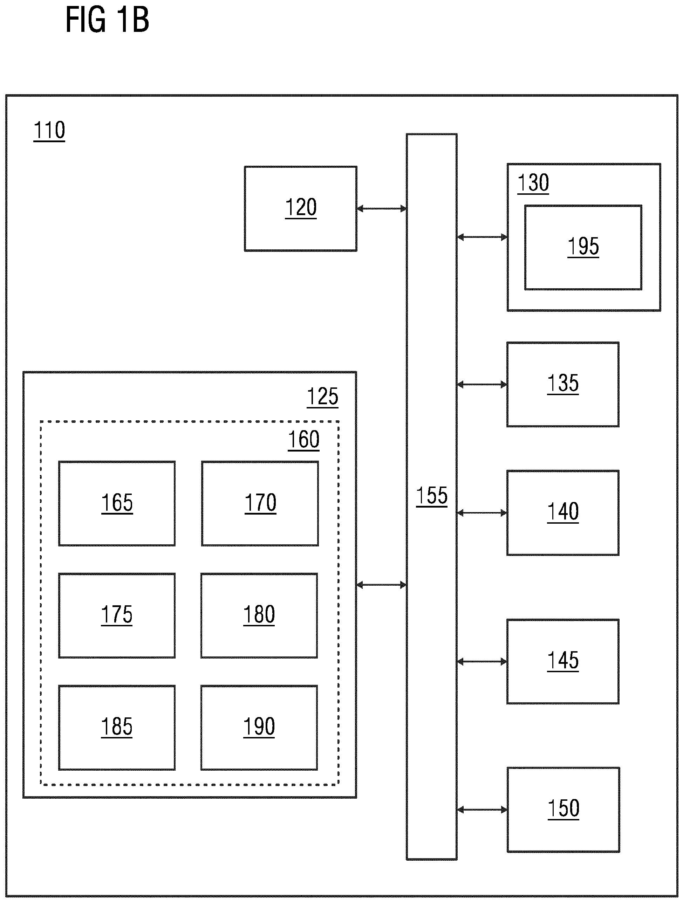

The apparatus 105 comprises a processing unit 120, a memory 125, a storage unit 130, a communication unit 135, a network interface 140, an input unit 145, an output unit 150, a standard interface or bus 155, as shown in FIG 1B. The apparatus 105 can be a (personal) computer, a workstation, a virtual machine running on host hardware, a microcontroller, or an integrated circuit. As an alternative, the apparatus 105 can be a real or a virtual group of computers (the technical term for a real group of computers is "cluster", the technical term for a virtual group of computers is "cloud"). The term 'processing unit', as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit.

The processing unit 120 may also include embedded controllers, such as generic or programmable logic devices or arrays, application specific integrated circuits, single-chip computers, and the like. In general, the processing unit 120 may comprise hardware elements and software elements. The processing unit 120 can be configured for multithreading, i.e., the processing unit 120 may host different calculation processes at the same time, executing the either in parallel or switching between active and passive calculation processes.

The memory 125 may include one or more of a volatile memory and a non-volatile memory. The memory 125 may be coupled for communication with the processing unit 120. The processing unit 120 may execute instructions and/or code stored in the memory 125. A variety of computer-readable storage media may be stored in and accessed from the memory 125. The memory 125 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. The memory 125 comprises a testing module 160 that may be stored in the memory 125 in the form of machine-readable instructions and executable by the processing unit 120. These machine-readable instructions when executed by the processing unit 120 causes the processing unit 120 to test the autonomous vehicle based on real-world scenarios. The testing module 160 comprises a preprocessing module 165, a training module 170, a configuration module 175, a deployment module 180 and a rendering module 185.

The preprocessing module 165 is configured for obtaining a training dataset from a source. The training module 170 is configured for synchronously training one or more adversarial agents and a software stack associated with an autonomous vehicle based on the training dataset. The term 'adversarial agents' as used herein may refer to trainable computational models (e.g., machine-learning models) that may be trained to mimic static or dynamic entities in a real-world environment wherein an autonomous vehicle may operate. In particular, each of the adversarial agents are configured to mimic one or more entities that impact behavior of the autonomous vehicle in the real-world environment. The configuration module 175 is adapted for configuring, based on a user request, a virtual testing environment comprising the trained one or more adversarial agents. The deployment module 180 is configured for deploying the virtual testing environment in a test execution platform for enabling testing of a dynamic behavior of at least another autonomous vehicle in response to one or more safety-critical scenarios simulated by the virtual testing environment. The term 'safety-critical scenario' as used herein, refers to a scenario that endangers or threatens a safety of the autonomous vehicle, for example, resulting in a collision, fatality, loss of control of the autonomous vehicle etc. The rendering module 185 is configured for rendering an output indicative of the dynamic behavior of the autonomous vehicle on a user interface.

The storage unit 130 comprises a non-volatile memory which stores a database 195 comprising default values for variable parameter definitions and constraints. The input unit 145 may include input means such as keypad, touch-sensitive display, camera, etc. capable of receiving input signal. The bus 155 acts as interconnect between the processing unit 120, the memory 125, the storage unit 130, and the network interface 140. The output unit 150 may include output means such as displays, speakers, etc. that are capable of providing an output.

The communication unit 135 enables the apparatus 105 to communicate with the one or more client devices 110. The communication unit 135 may support different standard communication protocols such as Transport Control Protocol/Internet Protocol (TCP/IP), Profinet, Profibus, Bluetooth and Internet Protocol Version (IPv). The network interface 140 enables the apparatus 105 to communicate with the client device 110 over the network 115.

The apparatus 105 in accordance with an embodiment of the present invention includes an operating system employing a graphical user interface. The operating system permits multiple display windows to be presented in the graphical user interface simultaneously with each display window providing an interface to a different application or to a different instance of the same application. A cursor in the graphical user interface may be manipulated by a testing personnel through the pointing device. The position of the cursor may be changed and/or an event such as clicking a mouse button, generated to actuate a desired response.

One of various commercial operating systems, such as a version of Microsoft Windows™ may be employed if suitably modified. The operating system is modified or created in accordance with the present invention as described.

Those of ordinary skilled in the art will appreciate that the hardware depicted in FIGS 1A and 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present invention.

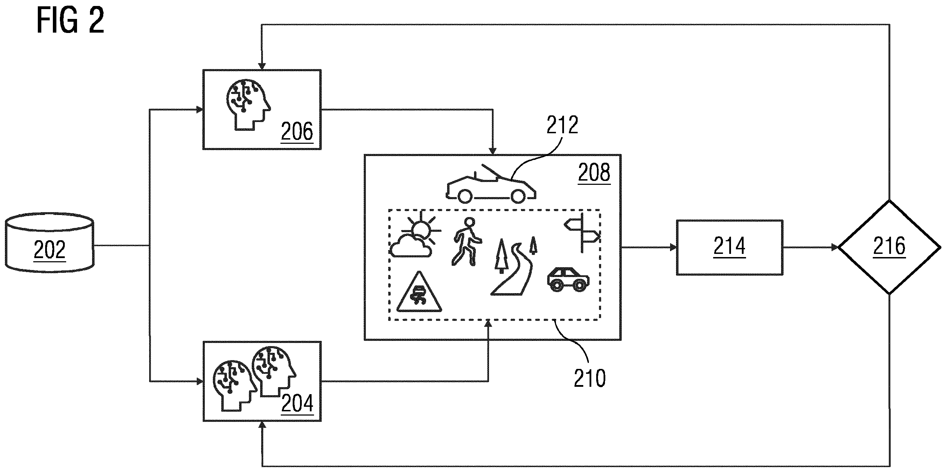

FIG 2 shows a workflow 200 for using a common training dataset 202 to synchronously train one or more adversarial agents 204 and a software stack 206, in accordance with an embodiment of the present invention.

The training dataset 202 comprises data points indicative of sequences of states, actions and rewards corresponding to a plurality of safety critical scenarios associated with autonomous vehicles. In a preferred embodiment, the training dataset 202 is in a state-action-reward format. For example, a data point corresponding to a given safety critical scenario, having state 'X', action 'Y' and reward 'Z', may be represented as 'X;Y;Z'. The training dataset 202 in state-action-reward format may be generated from simulated data or real-world data, for example, by preprocessing of pre-existing datasets corresponding to one or more autonomous vehicles. In the present example, the training dataset 202 is generated from available crash datasets and near-crash datasets. The data points may be indicative of, for example, environmental conditions of the autonomous vehicle, maneuvers, or actions of the autonomous vehicle in response to the environmental condition etc., that led to the scenario. For example, the data points indicative of the environmental conditions of the autonomous vehicle may include values indicative of ambient weather conditions, ambient temperature conditions, road geometry, friction coefficient associated with the road surface, etc., which resulted in the scenario. Further, the data points corresponding to the data points indicative of the autonomous vehicle may include braking, speed, acceleration, type of maneuver (e.g., parking, overtaking, reversing) etc. It should be understood that the types of data in the training dataset 202 may vary based on various factors such, but not limited to, a type of testing and a level of autonomy of the autonomous vehicle intended for the testing.

Each of the adversarial agents 204 are configured to mimic one or more real-world entities 210 in a simulation environment 208. The simulation environment 208 simulates a real-world environment in which an autonomous vehicle 212 is intended for operation in the presence of the entities 210. The entities 210 may be static or dynamic in nature. In case of testing of autonomous vehicles, the adversarial agents 204 may represent one of at least one of weather, illumination, road geometry, road surface, traffic signals, traffic signboards, pedestrians, and other vehicles on the road as shown in FIG 2. The software stack 206 is associated with the autonomous vehicle 212. In case of a fully autonomous vehicle, the software stack is an Autonomous Driving System (ADS). The software stack enables autonomous operation of the autonomous vehicle 212. In an embodiment, the software stack 206 may be a perception model, planning model, control model, a decision-making model or the like, or a combination thereof, that is to be deployed onto an Electronic Control Unit (ECU) associated with the autonomous vehicle 212. In another example, the software stack may correspond to an Advanced Driver Assistance System (ADAS) in case of a semi-autonomous vehicle.

The adversarial agents 204 are adversarial machine learning models that are configured to generate stimuli for affecting a behavior of the software stack 206 within the simulation environment 208, thereby mimicking effect of the entities 210 on the autonomous vehicle 212 in the real-world environment. The stimuli are intended to challenge a resilience of the software stack 206 against "adversarial behavior". In other words, the stimuli challenge decision-making capabilities of the autonomous vehicle 212, within a simulation environment 208, to expose potential failure modes of the autonomous vehicle 212 during operation in a real-world environment. The term 'failure mode' as used herein refers to potential errors in performance of the software stack 206, that may lead to an undesirable scenario. The undesirable scenario may be, for example, a collision with an oncoming vehicle or pedestrian, swerving off a curve, etc.

In order to enable the training, the training module 170 configures a closed loop adversarial learning setting in a simulation environment 208. The closed loop adversarial learning setting enables synchronized training of the one or more adversarial agents 204 and the software stack 206 using a feedback-based learning algorithm, based on a common training dataset 202. Further, a plurality of safety-critical scenarios for the autonomous vehicle 212 are simulated, within the simulation environment 208 to generate one or more simulation results.

Herein, the feedback-based learning algorithm enables synchronous training by providing a common feedback signal, to the one or more adversarial agents 204 and the software stack 206, at the same instance of time. Such synchronous training involves simultaneous updating of model parameters and/or policies of the one or more adversarial agents 204 and the software stack 206. The term 'policy' as used herein refers to strategies adopted by an adversarial agent for achieving a certain goal. Here, the goal is to maximize the reward. Advantageously, the synchronous training helps the one or more adversarial agents 204 to learn various actions that the software stack 206 may perform in response to various stimuli, and to generate stimuli that challenge the software stack 206. In a preferred embodiment, the feedback-based learning algorithm uses reinforcement learning to train an agent (the software stack 206 or the adversarial agents 204). Further, the feedback-based learning algorithm also aims to enhance performance of the software stack 206 and the one or more adversarial agents 204, simultaneously and synchronously, by leveraging a common feedback signal.

In reinforcement learning, an output data typically includes action selections or policies that maximize expected rewards in a given state. In other words, reinforcement learning algorithms are based on estimating value functions. The value functions are functions of states or of state-action pairs that estimate how good it is for an agent (the software stack 206 or the adversarial agents 204) to be in each state, or how good it is to perform a specific action in a given state. The notion of "how good" here is defined in terms of future rewards that may be expected. The rewards depend on actions taken by the agent. Accordingly, value functions are defined with respect to policies.

In the present invention, the software stack 206 is trained based on the training dataset 202 and stimuli generated by the one or more adversarial agents 204. The adversarial agents 204 are also trained in parallel based on the training dataset 202 and actions of the software stack 206. During training, respective policies of the adversarial agents 204 are updated. Similarly, respective policy of the software stack 206 is also updated based on the stimuli generated by the one or more adversarial agents 204. For example, adversarial reinforcement learning algorithms, such as Proximal Policy Optimization (PPO) or Trust Region Policy Optimization (TRPO), iteratively update policy of the software stack 206 by incorporating reinforcement feedbacks (feedback signals) gained from interactions with adversarial agents 204 in the simulation environment 208.

A policy $\pi$ is a mapping from each state $s \in S$ and action $a \in A(s)$, to the probability $\pi(s,a)$ of performing an action $a$ when in state $s$. In a typical reinforcement learning setting, the value of a state $s$ under a policy $\pi$, denoted by $V^{\pi}(s)$, is the expected reward when starting in $s$ and following $\pi$ thereafter.

$$V^{\pi}(s) = E_{\pi}\{R_t | s_t = s\} = E_{\pi}\left\{\sum_{k=0}^{\infty} \gamma^k r_{t+k+1} \,\middle|\, s_t = s\right\},$$

$$(1)$$

where $E_{\pi}\{\}$ denotes the expected value given that the agent follows policy $\pi$, and $t$ is any time step. The function $V^{\pi}$ represents the state-value function for policy $\pi$.

In the present embodiment, $\pi$ represents a likelihood of one or more adversarial agents 204 or the software stack 206 taking an action $a$ in state $s$. In particular, the state $s$ of represents a set of datapoints that define a scene in a simulation. The data points may correspond to, for example, positions, velocities, orientations of traffic participants (other vehicles, pedestrians etc.), environmental and local factors such as road geometry, illumination, weather, etc. For example, in case of an adversarial agent that represents another vehicle, actions may include performing a specific maneuvers such as turning right at 40kmph with a turning radius of 20 meters, coming close to the autonomous vehicle 212 to ensure a time headway of 1.5 seconds, etc. In case of other adversarial agents, actions may include illumination control for weather, coefficient of friction control for weather, etc.

Performing action $a$ in state $s$ based on the policy $\pi$ results in a new state s* within the simulation environment 208. Further, a reward for the one or more adversarial agents for taking an action $a$ in state $s$ is determined based on safety metrics associated with the new state s*. The safety metrics are computed by analyzing the one or more simulation results obtained from simulation of the safety critical scenarios, as shown by step 214. The simulation results may indicate, for example, collision, near collision, time-to-collision, responsibility sensitive safety and post encroachment time.

The safety metrics may include, for example, an aggregate score of all low time-to-collision interactions (e.g., < 2 seconds) of the autonomous vehicle 212 with dynamic entities 210 such as vehicles, pedestrians etc., and static entities or traffic furniture such as traffic poles, road dividers, etc.

In an embodiment, the reward may be in the form of a net safety criticality score computed using a predefined function, based on the one or more safety metrics. The net safety criticality score is one of a first category and a second category. In an example, the net safety criticality score falls under the first category if value of the net safety criticality score is greater than a threshold value. Otherwise, the net safety criticality score falls under the second category. In another example, the net safety criticality score may be one of two values, say, 'HIGH' and 'LOW'.

Depending on the net safety criticality score, a reinforcement feedback is generated. The reinforcement feedback is further provided to both the software stack 206 and the one or more adversarial agents 204 for updating respective policies of each of the software stack 206 and the one or more adversarial agents 204. The same reinforcement feedback is applied to both the software stack 206 and the one or more adversarial agents 204. However, the reinforcement feedback generated is configured to have opposite effects on the software stack 206 and the one or more adversarial agents 204. More particularly, the same reinforcement feedback acts as a positive learning feedback for the software stack 206, and as a negative learning feedback for the one or more adversarial agents 204, and vice versa.

If the net safety criticality score is of the first category, say 'HIGH', then a positive learning feedback is provided to the one or more adversarial agents 204 and a negative learning feedback is provided to the software stack 206, as shown by step 216. This is because, if the net safety criticality score is high or greater than a predefined threshold, the software stack 206 is to be trained to counteract the stimuli from the one or more adversarial agents 204 in a more efficient manner by doing less of the actions that led to the high net safety criticality score. In other words, the negative learning feedback penalizes the software stack 206 for the high net safety criticality score. On the other hand, the positive learning feedback rewards the adversarial agents 204 to generate more of similar stimuli that led to the high net safety criticality score.

Alternatively, if the net safety criticality score is 'LOW' or below the threshold value, then a positive learning feedback is provided to the software stack 206 to enable the software stack 206, at step 216, to perform more of the actions that led to the low net safety criticality score. On the other hand, the negative learning feedback penalizes the one or more adversarial agents 204. This causes the one or more adversarial agents 204 to update respective policies to generate better stimuli that leads to a higher net safety criticality score.

In the present embodiment, the trained adversarial agents 204 attempt to cause the software stack 206 to go into states (situations) that have high state value function. The state value function may implicitly represent a safety criticality of the situation and average safety criticality of subsequent situations that would arise after following policy $\pi$.

Similarly, the value of taking action $a$ in state $s$ under a policy $\pi$, denoted $Q^\pi(s,a)$, as the expected reward starting from $s$, taking the action $a$, and thereafter following policy $\pi$ is given by:

$$Q^\pi(s,a) = E_\pi\{R_t|s_t = s, a_t = a\} = E_\pi\left\{\sum_{k=0}^{\infty} \gamma^k r_{t+k+1} \;\middle|\; s_t = s, a_t = a\right\}. \tag{2}$$

$Q^\pi$ is the action-value function for policy $\pi$.

In the present disclosure, the adversarial agents 204, while following policy $\pi$ may choose an action $a$ in a given state that has maximum Q-function value so that the expected reward in terms of net safety criticality score of the states visited by the software stack 206 may be maximized over the scenario simulation.

The value functions $V^\pi$ and $Q^\pi$ may be estimated from experience. For example, if an agent follows policy $\pi$ and maintains an average, for each state encountered, of the actual rewards that have followed that state, then the average converges to the state's value, $V^\pi(s)$, as the number of times that state is encountered approaches infinity. If separate averages are kept for each action taken in a state, then these averages similarly converge to the action values, $Q^\pi(s,a)$. It must be understood that value functions $V^\pi$ and $Q^\pi$ may be solved using standard approaches known in the art.

Advantageously, the software stack 206 is trained against the adversarial agents 204, such that the adversarial agents 204 aim to maximize their own rewards by exploiting weaknesses of the software stack 206. This helps in making the software stack 206 more robust against adverse scenarios. The synchronous training of the adversarial agents 204 and the software stack 206, is repeated for updated policies of the software stack 206 and/or the adversarial agents 204 until a predefined criteria is met. In an implementation, the predefined criteria may be until a failure mode is reached.

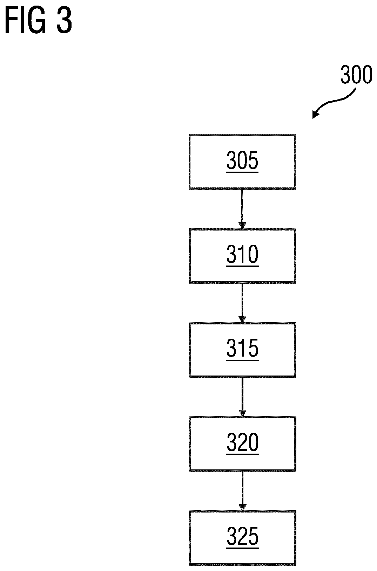

FIG 3 shows a flowchart of an exemplary method 300 for managing testing of autonomous vehicles, in accordance with an embodiment of the present invention. The method comprises steps 305 to 320, executable on the apparatus 105. Herein, an autonomous driving system associated with the autonomous vehicle is considered as the software stack. The autonomous driving system is to be deployed on the autonomous vehicle for enabling autonomous operation.

At step 305, a training dataset (similar to training dataset 202) is obtained, from a source. Herein, the source may be the local database 195 of the apparatus 105, a database server, a cloud storage or a file input by a user.

At step 310, one or more adversarial agents and a software stack associated with an autonomous vehicle are trained synchronously based on the training dataset, using a feedback-based learning algorithm, as explained earlier with reference to FIG 2.

At step 315, a virtual testing environment comprising the trained one or more adversarial agents is configured, based on a user request. The term 'virtual testing environment' as used herein, refers to a virtually simulated environment that mimics the real-world, wherein the autonomous vehicle is intended for operation. In particular, the one or more adversarial agents generate stimuli that mimic effect of real-world entities such as, but not limited to, pedestrians, traffic signals, road bumps etc., on the autonomous vehicle. The adversarial agents may generate the stimuli in isolation or in collaboration with one or more other adversarial agents.

The user may provide the user request to the apparatus 105 via a user interface of the client device 110. For example, the user request may include a command for initiating simulation of safety critical scenarios for the software stack. By default, the one or more adversarial agents and the software stack are initialized based on values present in the training dataset. Herein, the term 'initialize' may refer to determining an initial state of each of the one or more adversarial agents and the software stack. However, the user may also specify alternative or additional initial conditions through the user request. The one or more adversarial agents and/or the software stack may be further updated based on the initial conditions from the user request. In addition, the user request may also define one or more terminating conditions. The terminating conditions may define, for example, a state of at least one of the adversarial agents or the software stack, at which the simulation must be terminated.

At step 320, the virtual testing environment is deployed onto a test execution platform for enabling testing of a dynamic behavior of at least another autonomous vehicle in response to one or more safety-critical scenarios simulated by the virtual testing environment. In an example, the test execution platform may be a testbed used for Euro NCAP testing for assessing safety of an autonomous vehicle. In an embodiment, the test execution platform is associated with one of vehicle-in-loop testing (VILT), hardware-in-the loop testing (HWILT), human-in-loop testing (HILT), software-in-loop testing (SWILT), and model-in-loop testing (MILT). Testing methods such as VILT, HWILT, HILT, SWILT, and MILT are well-known in the field of testing of autonomous vehicles and are commonly used by persons skilled in the art. For the sake of brevity and clarity, detailed explanations of these testing methods are not provided herein. It is understood that those skilled in the art would readily comprehend and be familiar with their meanings and usage in the relevant technical context.

In an implementation, deploying the virtual testing environment may comprise installing a computer program product generated based on the virtual testing environment on a hardware associated with the test execution platform. For example, the computer program product may be a software package comprising machine-readable instructions stored therein, that may be loaded onto a memory of the test execution platform. The computer program product may be provided as a service by a cloud computing platform to one or more 'tenants' or 'sub-tenants'. Each of the tenants or sub-tenants may be associated with one or more test execution platforms. The tenant is a client device, communicatively coupled to the cloud computing platform, that enables an operator to request for installing the virtual testing environment on the test execution platform. Further, cloud computing platform may transmit the computer program product to the tenant. The tenant may further initiate installation of the virtual testing environment on the test execution platform, for configuring the test execution platform based on the virtual testing environment. The test execution platform may be, for example, a workstation or a simulation platform configured to perform one of VILT, HWILT, HILT, SWILT, and MILT.

For example, during MILT or SWILT, the trained one or more adversarial agents simulate safety-critical scenarios for affecting behavior of at least another autonomous vehicle, on the test execution platform. Further, a system-under-test corresponding to the at least another autonomous vehicle reacts to the stimuli by performing an action. Herein, the system-under-test may indicate software components, hardware components, electrical components, etc., associated with the at least another autonomous vehicle, depending on the type of testing. Herein, an action of the system-under-test in response to a safety critical scenario generated by the virtual testing environment, is indicative of the dynamic behavior of the at least another autonomous vehicle in response to the simulated safety-critical scenarios. The action of the system-under-test may be quantified by one or more performance parameters such as stopping distance of the autonomous vehicle, time to collision, post encroachment time, response time etc. The action may be identified based on one or more simulation results, indicative of the one or more performance parameters, generated upon the simulation.

Further, the test execution platform renders an output indicative of the dynamic behavior of the at least another autonomous vehicle (i.e., the system-under-test) on a user interface. In an embodiment, a graphical rendering of the simulation along with the one or more simulation results may also be provided on the user interface for enabling the user to visualize performance of the at least another autonomous vehicle within the virtual testing environment. In a further embodiment, one or more safety metrics associated with the autonomous vehicle are computed by analyzing the one or more simulation results. For example, the one or more performance parameters in the simulation results may be processed using a predetermined function to compute the one or more safety metrics.

It may be understood by a person skilled in the art that it is also possible to modify the invention to train the adversarial agents for a software stack associated with an autonomous vehicle specified by a user. For example, the user may provide specify the software stack through a file input (source). Further, a virtual testing environment configured based on adversarial agents thus trained, may be used for performing a variety of tests (HILT, SWILT, HWILT etc.) on the same autonomous vehicle specified by the user.

Advantageously, providing the common reinforcement feedback to the software stack and the one or more adversarial agents based on the net safety criticality score, during training, helps in creating more safety-critical scenarios for testing and validating any system-under-test associated with an autonomous vehicle. As a result, the autonomous vehicle can learn how to react in diverse scenarios, thus improving safety.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

While the invention has been illustrated and described in detail with the help of a preferred embodiment, the invention is not limited to the disclosed examples. Other variations can be deducted by those skilled in the art without leaving the scope of protection of the claimed invention.

Reference sign list

> 100 testing environment
> 105 apparatus
> 110 One or more client devices
> 115 network
> 120 processing unit
> 125 memory
> 130 storage unit
> 135 communication unit
> 140 network interface
> 145 input unit
> 150 output unit 150
> 155 standard interface or bus
> 160 testing module
> 165 preprocessing module
> 170 training module
> 175 configuration module
> 180 deployment module
> 185 rendering module
> 195 database
> 202 training dataset
> 204 one or more adversarial agents
> 206 software stack of an autonomous vehicle
> 210 entities
> 212 autonomous vehicle

**Claims**

1. A computer-implemented method for managing testing of an autonomous vehicle, the method comprising:

   • obtaining a training dataset from a source, by a processing unit (120);
   • synchronously training one or more adversarial agents (204) and a software stack (206) associated with an autonomous vehicle (212) based on the training dataset, wherein each of the adversarial agents (204) are configured to mimic one or more entities (210) that impact behavior of the autonomous vehicle in a real-world environment;
   • configuring a virtual testing environment comprising the trained one or more adversarial agents (204), based on a user request; and
   • deploying the virtual testing environment onto a test execution platform for enabling testing of a dynamic behavior of at least another autonomous vehicle in response to one or more safety-critical scenarios simulated by the virtual testing environment.

2. The method according to claim 1, wherein synchronously training the one or more adversarial agents (204) and the software stack (206) based on the training dataset, comprises:

   • configuring a closed loop adversarial learning setting in a simulation environment (208), based on the one or more adversarial agents (204) and the software stack (206) ;

• simulating a plurality of safety-critical scenarios for the autonomous vehicle based on the closed loop adversarial learning setting, within the simulation environment (208), to generate one or more simulation results, wherein the one or more simulation results are indicative of a response of the autonomous vehicle to the plurality of safety-critical scenarios; and

• computing one or more safety metrics associated with the autonomous vehicle by analyzing the one or more simulation results.

3. The method according to claim 2, further comprising:

• computing a net safety criticality score based on the one or more safety metrics, using a predefined function, wherein the net safety criticality score is one of a first category and a second category;
• generating a reinforcement feedback based on the net safety criticality score; and
• providing the reinforcement feedback to both the software stack (206) and the one or more adversarial agents (204), synchronously, for updating respective policies of each of the software stack (206) and the one or more adversarial agents (204);

4. The method according to claims 1 and 3, wherein generating the reinforcement feedback based on the net safety criticality score, comprises:

• if the net safety criticality score is of the first category:
generating a positive learning feedback for the one or more adversarial agents (204) and a negative learning feedback for the software stack (206); and
• if the net safety criticality score is of the second category:
generating a negative learning feedback for the one or more adversarial agents (204) and a positive learning feedback for the software stack (206).

5. The method according to claim 1, wherein the one or more entities represented by the adversarial agents (204) comprise at least one of weather, illumination, road geometry, road surface, traffic signals, traffic signboards, pedestrians, obstacles and other vehicles.

6. The method according to claim 1, wherein the test execution platform is associated with one of vehicle-in-loop testing, hardware-in-loop testing, human-in-loop testing, software-in-loop testing, and model-in-loop testing.

7. The method according to claim 1, wherein the output of a software stack associated with the at least another autonomous vehicle, in response to the one or more safety-critical scenarios simulated by the virtual testing environment is indicative of the dynamic behavior of the autonomous vehicle.

8. An apparatus (105) comprising:

one or more processing units (120); and
a memory unit (125) communicatively coupled to the one or more processing units (120), wherein the memory unit (125) comprises a testing module (160) stored in the form of machine-readable instructions executable by the one or more processing units (120), wherein the testing module (160) is configured to perform method steps according to any of the claims 1 to 7.

9. A testing environment (100) comprising:

one or more client devices (110) configured to receive a user request from a user; and
an apparatus (105) according to claim 10, communicatively coupled to the one or more client devices (110), wherein the apparatus (105) is configured for managing testing of autonomous vehicles based on the user request received from the one or more client devices (110), according to any of the method claims 1 to 7.

10. A computer-program product having machine-readable instructions stored therein, which when executed by one or more processing units (120), cause the processing units (120) to perform a method according to any of the claims 1 to 7.

11. A computer-readable medium comprising a computer program product comprising computer program code which, when executed by one or more processing units (120), cause the one or more processing units (120) to carry out the method of one of the claims 1 to 7.

12. A computer-program product having machine-readable instructions stored therein, which when executed by a test execution platform, cause the test execution platform to be configured based on a virtual testing environment comprising one or more adversarial agents (204) trained according to any of the claims 1 to 7.

13. A computer-readable medium comprising a computer program product which, when executed by a test execution platform, cause the test execution platform to be configured based on a virtual testing environment comprising one or more adversarial agents (204) trained according to any of the claims 1 to 7.

FIG 1A

100

105

115

110

# FIG 1B

# FIG 2

EP 4 498 253 A1

FIG 3

300

305

310

315

320

325

Europäisches
Patentamt

European
Patent Office

Office européen
des brevets

# EUROPEAN SEARCH REPORT

Application Number

EP 23 18 8528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN BAIMING ET AL: "Adversarial Evaluation of Autonomous Vehicles in Lane-Change Scenarios", IEEE TRANSACTIONS ON INTELLIGENT TRANSPORTATION SYSTEMS, [Online] vol. 23, no. 8, 23 November 2020 (2020-11-23), pages 10333-10342, XP093116867, Piscataway, NJ, USA ISSN: 1524-9050, DOI: 10.1109/TITS.2021.3091477 Retrieved from the Internet: URL:https://arxiv.org/pdf/2004.06531.pdf> [retrieved on 2024-01-08] * abstract * * page 2, left-hand column * * page 3, left-hand column, paragraph 1 * * page 6 - page 7, left-hand column * * the whole document * | 1-13 | INV. G06F11/36 G06N20/10 G06N3/006 G06N20/00 |
| A | WENHAO DING ET AL: "A Survey on Safety-critical Scenario Generation from Methodological Perspective", ARXIV.ORG, CORNELL UNIVERSITY LIBRARY, 201 OLIN LIBRARY CORNELL UNIVERSITY ITHACA, NY 14853, [Online] 4 February 2022 (2022-02-04), XP091150206, Retrieved from the Internet: URL:https://arxiv.org/pdf/2202.02215v1.pdf > [retrieved on 2022-04-18] * abstract * | 1-13 | **TECHNICAL FIELDS SEARCHED (IPC)** G06F G06N |

The present search report has been drawn up for all claims

| Place of search | Date of completion of the search | Examiner |
|---|---|---|
| Munich | 9 January 2024 | Leuridan, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)